# EUROPEAN PATENT SPECIFICATION

(11) **EP 4 015 903 B1**
(45) Date of publication and mention of the grant of the patent: **17.09.2025**
(21) Application number: 21213413.4
(22) Date of filing: 09.12.2021
(51) Int. Cl.: F23D 1/00, F23D 11/36, F23D 14/78

(54) **COOLING JACKET FOR GASIFICATION BURNER AND METHOD OF OPERATION**
KÜHLMANTEL FÜR VERGASUNGSBRENNER UND BETRIEBSVERFAHREN
GAINE DE REFROIDISSEMENT POUR BRÛLEUR DE GAZÉIFICATION ET PROCÉDÉ DE FONCTIONNEMENT

(30) Priority: 15.12.2020 US 202017121937
(43) Date of publication of application: 22.06.2022
(73) Proprietor: AIR PRODUCTS AND CHEMICALS, INC., Allentown, Pennsylvania 18195 (US)
(72) Inventor: Gao, Chengming, Beijing (CN); Qu, Qiang, Shanghai (CN); Quan, Xiaoming, Beijing (CN); Zhou, Qiong, Katy, 77494 (US); Cheng, Jian, Leping City (CN); Kiffer, Micah, Kutztown, 19530 (US); Sripada, Rajeshwar, 500062 10-Karnatak (IN); Chan, Henry, Bellaire, 77401 (US); Ramachandran, Ganesan, 411028 HADASPAR PUNE, MH (IN)
(74) Representative: Kador & Partner Part mbB

(56) References cited:
- JP-A- 2007 278 581
- US-A- 4 858 538
- US-A1- 2015 300 634

## Description

### BACKGROUND

The invention relates to a method and apparatus for protecting a burner used for the partial combustion (or gasification) of solid carbonaceous fuels. In particular, the invention relates to the design and use of a cooling jacket to protect a burner in partial combustion processes using an oxygen-containing gas and a fuel stream comprising a finely divided solid carbonaceous fuel carried by a fluid to produce a synthesis gas comprising carbon monoxide and hydrogen gas. The synthesis gas product is typically used as a fuel gas or as a feedstock for chemical processes.

The term "solid carbonaceous fuel" as used herein is intended to include various gas-carried combustible materials and mixtures thereof, and may be selected from the group of coal, coke from coal, coal liquefaction residues, petroleum coke, soot, biomass, and particulate solids derived from oil shale, tar sands and pitch. The coal may be of any type, including lignite, sub-bituminous, bituminous and anthracite. The solid carbonaceous fuel preferably has a particle size distribution in which at least about 90% by weight of the material has an average particle diameter less than 90 microns and the moisture content is less than about five percent by weight. The solid carbonaceous fuel may be delivered to the burner as a suspension in a fluid such as a carrier gas or a liquid slurry.

The term "oxygen-containing gas" as used herein is intended to refer to gases containing free oxygen (O2) and include air, oxygen-enriched air (i.e., comprising more than 21 mole % oxygen), and also substantially pure oxygen (i.e., comprising more than about 95 mole % oxygen), with the remainder comprising gases normally found in air such as nitrogen, and/or rare gases.

The partial combustion or gasification of solid carbonaceous fuels such as coal to produce gases having value as residential and industrial fuels, as starting materials for synthesis of chemicals and fuels, and as an energy source for generations of electricity has long been recognized and practiced on varying scales throughout the world.

At the discharge end of a gasification burner, combustion temperatures can reach 1300° C or higher. This causes thermal stresses and deterioration of the burner front, or face, during prolonged operation, particularly fatigue stresses, which may ultimately result in leaks of coolant. Moreover, during operation burner heads also undergo high mechanical pressure loads. For these reasons it is desirable to employ a cooling jacket that can reduce both the metal temperature and variations in the metal temperature to reduce thermal stress and increase burner lifetime.

Hasenack et al. (US 4,887,962) teach a cooling jacket with a spiral flow path in the tip, which is said to maximize the flow rate of water and maximize heat removal.

Van Der Ploeg et al. (WO 2009/019272) teach a cooling jacket in which cooling water enters a transitional section prior to the burner front, where the cross-sectional area decreases and is said to lead to increased flow velocity and a lower pressure drop. Kuypers et al. (US 4,858,538) teach a burner for the partial combustion of a solid carbonaceous fuel, and suitable for use in an reactor having a plurality of burners wherein e.g. finely divided coal is supplied to a reactor space via a central channel disposed along the longitudinal axis of the burner, and oxygen-containing gas is supplied via an annular channel surrounding said central channel and configured for said gas to intersect said coal at an acute angle, and heat from the combustion is removed from a dimensioned curvilinear hollow front of the burner by coolant flowed radially at constant momentum through.

Efficient operation of a cooling jacket requires maximizing the flow rate of heat transfer fluid to carry away as much heat from the gasifier as possible. However, recirculation zones can form in which the heat transfer fluid becomes effectively trapped, resulting in hot spots and mechanical failure. There exists a need in the art for a cooling jacket design that minimizes or even eliminates the formation of recirculation zones to maximize heat transfer in the cooling jacket.

### SUMMARY

The objective of the present invention is to increase burner lifetime by minimizing both the temperature and variations in temperature of the metal on the burner front.

The present invention includes a cooling jacket apparatus according to claim 1 and a method of operation according to claim 11 to improve fluid flow near the burner front while minimizing pressure drop. Further developments of the invention are specified in the dependent claims.

### BRIEF DESCRIPTION OF THE DRAWINGS

The present invention will hereinafter be described in conjunction with the appended figures, wherein like numerals denote like elements:
Fig.1 shows a cooling jacket according to the present invention.
Fig. 2 shows a modification of the embodiment of Fig. 1 in which the cooling jacket has a fin projecting into the heat transfer fluid flow path near the exit of the inner channel.
Fig. 3 shows a modification of the embodiment of Fig. 1 in which the wall corner of the cooling jacket has a larger radius of curvature than Fig. 1.
Fig. 4 shows a modification of the embodiment of Fig. 2 in which the wall corner of the cooling jacket has a larger radius of curvature than Fig. 2.

### DETAILED DESCRIPTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. Various changes may be made in the function and arrangement of elements without departing from the scope of the invention, as set forth in the appended claims.

Feed injectors used in gasification processes typically comprise a burner and a cooling jacket surrounding the burner.

The burner will typically comprise a series of concentric channels to deliver one or more carbonaceous fuel steams and one or more oxygen-containing gas streams to a gasifier.

The cooling jacket comprises two concentric channels in order to provide a flow path for a heat transfer fluid, typically water, to travel through one channel toward the burner front, travel along the burner front, and return through the other channel. At higher process temperatures, steam may be used as a heat transfer fluid. The heat transfer fluid may travel toward the burner front through the outer channel and return via the inner channel, but in the preferred embodiment travels toward the burner front through the inner channel and returns via the outer channel.

The cooling jacket may comprise a single piece or be built from multiple connected pieces for ease of construction and/or maintenance. For example, the cooling jacket may be constructed by mounting a conical head to a cylindrical block with two concentric annular channels via a connector block with holes to allow heat transfer fluid to pass. This provides a stable mount for the conical head, which has thinner walls to allow better heat transfer at the expense of physical strength.

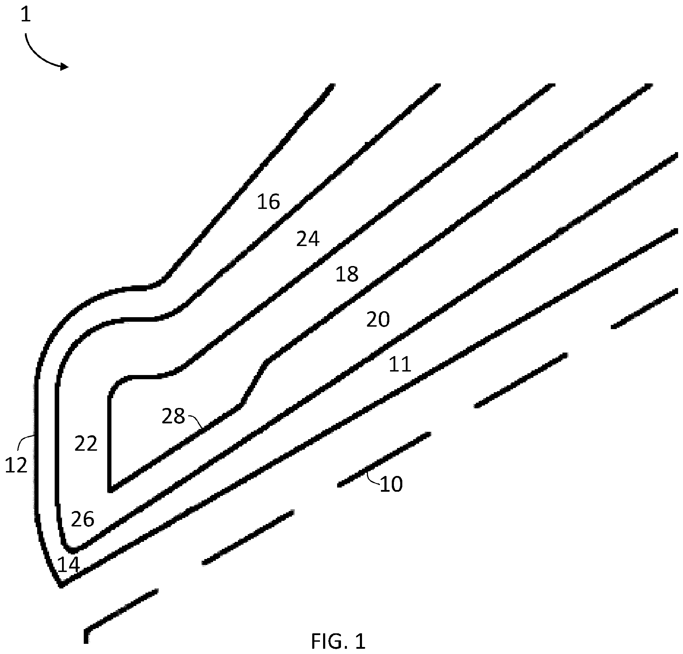

Fig. 1 shows a radial cross section along the axis of rotation of a cooling jacket 1 according to the present invention. As used herein, a radial cross section is defined as a plane that travels through the rotational axis of symmetry, whereas a circular cross section is defined as a plane that is normal to the rotational axis of symmetry. The walls of the cooling jacket 1 can be defined as follows: a conical head inner wall 11 is closest to the burner 10, and physically connected to a tip wall 12. The term physically connected as used herein encompasses the two features being either two or more sections of a single piece or two or more pieces joined such as by welding. The tip wall 12 is usually the thinnest wall in the cooling jacket because it interfaces with the high temperature gasifier and must transfer as much heat as possible to the heat transfer fluid to avoid damaging the feed injector 1. An engineering tradeoff is typically required to make the tip wall 12 as thin as possible while still handling the pressure differential between the heat transfer fluid and the gasifier. The physical connection between the conical head inner wall 11 and the tip wall 12 forms a wall corner 14 and may be the joint where two or more pieces were joined or a transition area in a single piece. The tip wall 12 is also physically connected to the conical head outer wall 16. In the space between the conical head inner wall 11 and the conical head outer wall 16 there is an internal cone 18. The thickness of the internal cone 18 may be varied to influence the flow velocity of the heat transfer fluid.

The flow path for the heat transfer fluid is defined by the walls of the cooling jacket. An inner channel 20 is defined by the space between the conical head inner wall 10 and the internal cone 18. A tip channel 22 is defined by the space between the tip wall 12 and the internal cone 18. An outer channel 24 is defined by the space between the conical head outer wall 16 and the internal cone 18. A flow recirculation zone 26 is formed at or near the intersection of the inner channel and the tip channel, the flow recirculation zone 26 defined by a plane perpendicular to the inner wall intersecting with the end of the internal cone, a plane perpendicular to the tip wall intersecting with the end of the internal cone, the tip wall, and the inner wall.

Computational fluid dynamics (CFD) modeling has shown that the behavior of the heat transfer fluid in the flow recirculation zone 26 is a key determiner of the lifetime of the burner. Specifically, when the flow separates and a dead zone forms near the wall corner 14, localized hot spots can form when the heat transfer fluid cannot carry the heat away from the tip wall 12 and can even cause boiling. It is a goal of the present invention to improve flow in the flow recirculation zone 26 and minimize or eliminate any dead zones. This improved flow results in lower temperatures in the tip wall 12 at the interface between the tip wall 12 and the heat transfer fluid, as well as a smaller difference between the maximum and minimum temperatures in the tip wall 12, which in turn can reduce thermal stress and increase burner lifetime.

One way to improve flow in the flow recirculation zone 26 is to increase the flow velocity of the heat transfer fluid by creating a flow restriction 28 in the inner channel 20 near the flow recirculation zone 26. One way to create the flow restriction 28 is by increasing the thickness of the internal cone 18 near the tip. Because the flow restriction also increases pressure drop, the flow restriction is preferably placed near the outlet of the inner channel to minimize pressure drop. The amount of flow restriction can be measured by the ratio of the thickness of the inner channel at the inlet to the thickness of the inner channel at the interface with the flow recirculation zone 26. The optimum ratio of channel thickness for improving flow in the flow recirculation zone was demonstrated by CFD modeling to be between 1.5 and 3. Alternatively the amount of flow restriction can be measured by the ratio of linear velocity of the heat transfer fluid at the outlet of the inner channel to the linear velocity of the heat transfer fluid at the inlet of the inner channel. The optimum ratio of heat transfer fluid linear velocity for improving flow in the flow recirculation zone was demonstrated by CFD modeling to be between 1.3 and 2.8.

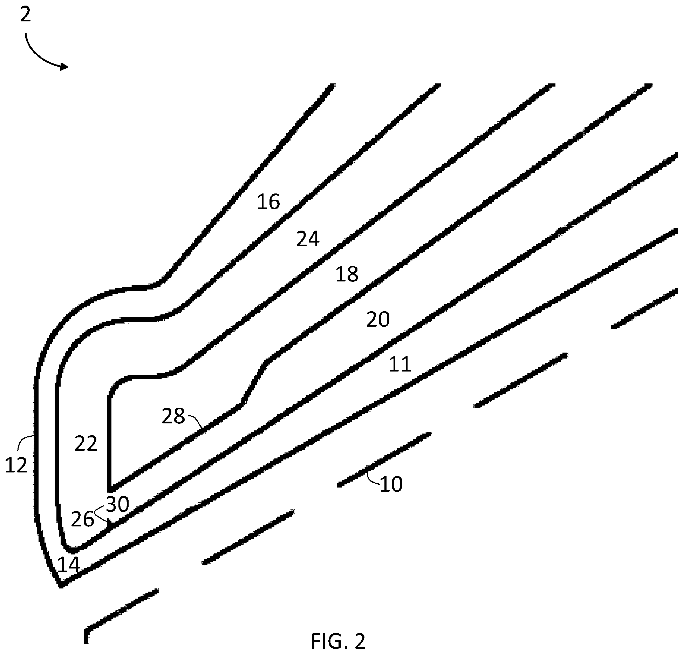

Fig. 2 shows a cooling jacket 2 including a further structural element for improving flow in the flow recirculation zone 26. One or more fins 30 are oriented so that they extend into the flow path of the heat transfer fluid either in the inner channel 20 or the recirculation zone 26, and the length of a fin is defined as the distance the fin extends into the heat transfer fluid flow path in the direction normal to the wall. The one or more fins 30 may have a range of radial cross sectional shapes sufficient for achieving the desired result, including but not limited to triangular, rectangular, or any other shape, particularly one that is easy to machine into or connect to the wall. Where more than one fin is used, the fins may have the same or different size and may be of the same or different cross sectional shape. The one or more fins 30 can be discrete fins arranged along the circumference of the wall, or preferably a single, continuous structure attached to the wall. The one or more fins 30 can be attached to the conical head inner wall 10 or the internal cone 18. Preferably, the one or more fins 30 are a single, continuous structure attached to the conical head inner wall and located in the flow recirculation zone.

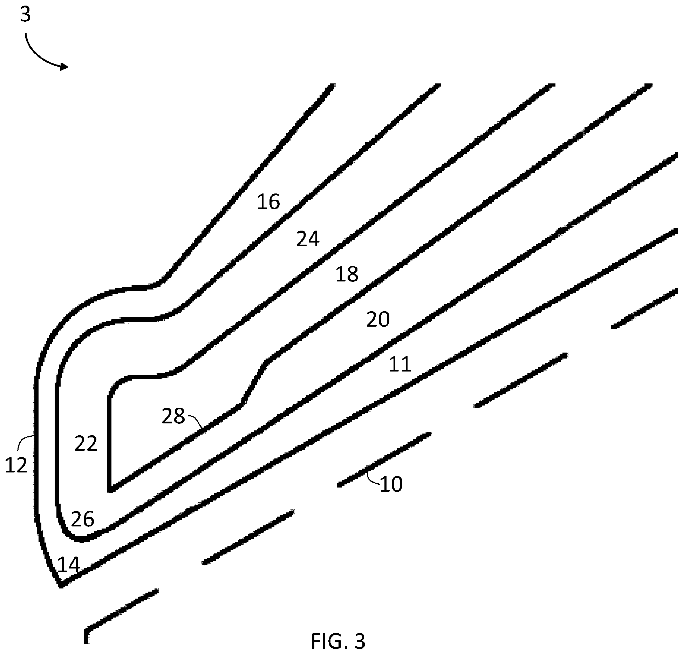

CFD modeling has also demonstrated that the geometry of the wall corner 14 has a strong influence on the flow pattern of the heat transfer fluid in the flow recirculation zone 26. The radius of curvature of the wall corner 14 when viewed along a radial cross section is typically minimized, as this results in a thinner tip wall 12 near the wall corner 14. However, CFD modeling shows that a larger radius of curvature results in less flow separation along the wall corner, higher heat transfer fluid flow velocities, and a lower tip wall temperature despite a thicker tip wall 12. Fig. 3 illustrates an embodiment of the present invention in which the wall corner 14 has a greater radius of curvature equal to about 2.0 mm, compared to a radius of curvature of about 0.5 mm in Fig. 1. The radius of curvature may range from 0.5 to 4.0 mm, or from 1.25 to 1.5 mm.

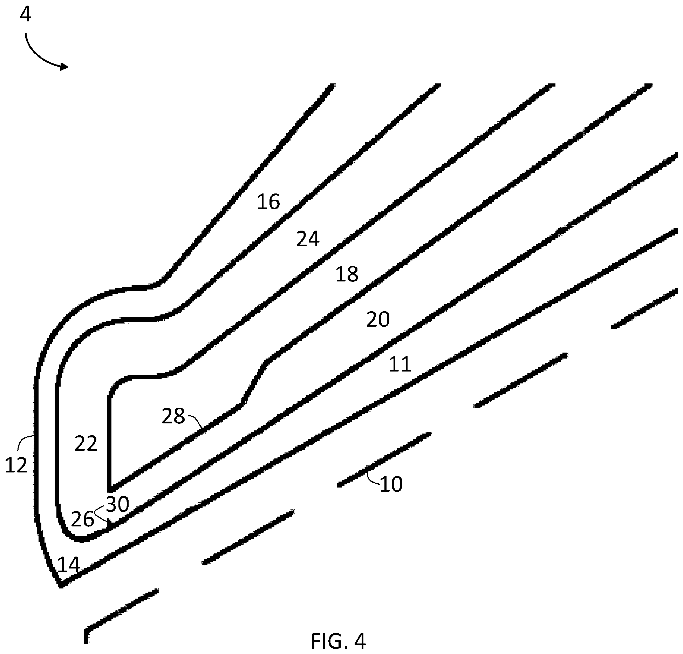

Each of the fin and the rounded wall corner improve the tip wall temperature, but even greater improvements can be attained by combining the two as seen in Fig. 4.

The embodiments described herein provide several advantages over the incumbent technology, which typically uses a spiral coil design in the burner front. The spiral tip in such designs is usually welded to the burner front, leading to multiple possible issues including cracking at the dissimilar weld, thermal fatigue of the inner rim of the cooling front, and corrosion near the junction of the spiral tip and main flange. High alloy materials have been employed in order to prevent corrosion, however this also leads to high cost. The lifetime of the cooling jacket in the present invention is expected to be much longer without the need for such high cost materials.

The cooling jacket is located in the dome of the reactor and surrounded by refractory material. A proper interface between the dome refractory and the cooling jacket is required, especially for retrofit cases when a castable plug is designed at the outside of the cooling jacket, with anchor inside, to protect the jacket. Spiral coil designs typically have no means to anchor the cooling jacket to the castable plug, which reduces cooling jacket lifetime.

A typical mitigation for the higher temperatures in the cooling jacket is to thicken the tip wall to maintain strength at the higher metal temperatures. The improved heat transfer in the cooling jacket of the present invention allows a thinner wall to be used because the metal has much better strength at lower temperatures, which are possible due to the narrow inner channel, cooling fins and rounded tip corners. The tip wall thickness achievable by the improved flow in the flow recirculation zone is between 1 mm and 8 mm, or between 1.5 mm and 4 mm.

Improved wall strength also allows operation of the cooling jacket at higher pressures. Typically, the heat transfer fluid is water at 0-10 barg, but the present invention also allows for operation at higher pressures which offers multiple benefits. For example, operating between 0 and 10 bar higher than the pressure of the gasifier offers safety benefits, as any leaks will cause water to harmlessly enter the gasifier rather than allowing flammable syngas to enter the cooling water system and cause a risk of fire or explosion. Additionally, an elevated pressure inside of the cooling jacket provides greater structural stability for a given wall thickness, which improves performance and lifetime of the cooling jacket.

### EXAMPLE

The four cooling jacket embodiments shown in Figs. 1-4 were modeled using CFD under the assumptions that the gasifier combustion temperature outside of the outer surfaces of the tip wall and the outer channel extending back from the burner face for a distance of 50 mm was constant at 1371°C. Cooling water at 43°C and 10 barg was fed into the inner channel at a mass flow rate of 11.34 kg/s. In addition, a case was modeled in which the mass flow rate of the cooling water in the Fig. 1 design was increased by 50% to 17.01 kg/s. In Table 1, the maximum temperature of the inner surface of the tip wall, the range between maximum and minimum temperatures, and the pressure drop for each of the five cases are shown.

As can be seen, case 2 lowers the maximum tip wall temperature and range of tip wall temperatures, but does so at the cost of more than doubling the pressure drop. Cases 3-5 reduce the maximum tip wall temperatures without requiring an increase in cooling water flow rate. Introducing a 1 mm circular fin, as in case 3, reduces the tip wall temperatures more than in case 2, and with a lower pressure drop. The 2 mm radius rounded corner in case 4 is even more effective, with the same pressure drop as case 1 but much lower tip wall temperatures. Finally, the lowest tip wall temperatures are seen with the combination of the 2 mm radius rounded corner and 1 mm circular fin in case 5.

**Table 1**

| Case | Figure | Water (kg/s) | Max tip wall T (C) | Max-min tip wall T (C) | Pressure drop (bar) |
|---|---|---|---|---|---|
| 1 | 1 | 11.34 | 236 | 192 | 1.3 |
| 2 | 1 | 17.01 | 198 | 154 | 2.8 |
| 3 | 2 | 11.34 | 168 | 123 | 1.6 |
| 4 | 3 | 11.34 | 145 | 100 | 1.3 |
| 5 | 4 | 11.34 | 79 | 34 | 1.6 |

While the principles of the invention have been described above in connection with preferred embodiments, it is to be clearly understood that this description is made only by way of example and not as a limitation of the scope of the invention.

## Claims

1. A feed injector for gasification of a feed stream comprising a slurry of solid carbonaceous fuel, the feed injector comprising:
a burner (10) and a cooling jacket (1) surrounding the burner (10);
wherein the cooling jacket (1) comprises a conical head inner wall, a tip wall (12), a conical head outer wall, and an internal cone (18);
wherein the conical head inner wall (11) is connected to the tip wall (12) at a wall corner (14), the tip wall (12) is connected to the conical head outer wall, and the internal cone (18) is surrounded by the conical head inner wall, the tip wall (12), and the conical head outer wall;
wherein an inner channel (20) comprising a heat transfer fluid inlet is defined by the space between the conical head inner wall (11) and the internal cone (18);
wherein a flow recirculation zone (26) is in fluid flow communication with a tip channel (22) and is defined by the space between the conical head inner wall, the tip wall (12), and the point of the internal cone (18) nearest the wall corner (14);
wherein the tip channel (22) in fluid flow communication with the flow recirculation zone (26) is defined by the space between the tip wall (12) and the internal cone(18);
wherein an outer channel (24) in fluid flow communication with the tip channel (22) is defined by the space between the conical head outer wall (16) and the internal cone (18);
wherein the inner channel (20) has a thickness defined by the distance from the conical head inner wall (11) to the internal cone (18); wherein the ratio of the thickness of the inner channel (20) at the heat transfer fluid inlet to the thickness of the inner channel (20) at the interface with the flow recirculation zone (26) is between 1.5 and 3.

2. The feed injector of claim 1, further comprising one or more fins (30) extending into the inner channel (20) and/or flow recirculation zone.

3. The feed injector of claim 2, wherein the length of the one or more fins (30) is between 1 and 4 mm.

4. The feed injector of claim 2, wherein the one or more fins (30) comprise a single continuous circular structure.

5. The feed injector of claim 1, further comprising one or more fins (30) attached to the conical head inner wall (11) and extending into the flow recirculation zone.

6. The feed injector of claim 5, wherein the length of the one or more fins (30) is between 1 and 4 mm.

7. The feed injector of claim 5, wherein the one or more fins (30) comprise a single continuous circular structure.

8. The feed injector of claim 1, wherein the wall corner (14) at the interface with the flow recirculation zone (26) has a radius of curvature as measured along a radial cross section, the radius of curvature being between 0.5 and 4 mm.

9. The feed injector of claim 1, wherein the thickness of the tip wall (12) is between 1 mm and 8 mm.

10. The feed injector of claim 1, further comprising a refractory block contacting the outer surface of the conical head outer wall.

11. A method of operating a feed injector for a gasifier, the method comprising:
feeding a heat transfer fluid through an inner channel (20) having a flow restriction (28) to increase the linear velocity of the heat transfer fluid, and heating the heat transfer fluid by direct contact with a tip wall (12);
wherein the tip wall (12) has a maximum temperature and a minimum temperature along the interface between the tip wall (12) and the heat transfer fluid;
the difference between the maximum and minimum temperature is less than 150 °C; and
wherein the ratio of the linear velocity of the heat transfer fluid at the inlet of the inner channel (20) to the linear velocity of the heat transfer fluid at the outlet of the inner channel (20) is between 1.3 and 2.8.

12. The method of claim 11, wherein the maximum temperature along the interface between the tip wall (12) and the heat transfer fluid is less than 190 °C.

13. The method of claim 11, wherein the pressure of the heat transfer fluid is between 0 and 10 bar greater than the pressure in the gasifier.

14. The method of claim 11, wherein the pressure of the heat transfer fluid is about 10 bara.

## Patentansprüche

1. Einspeiseinjektor für die Vergasung eines Zufuhrstroms, umfassend eine Schlämme aus festem kohlenstoffhaltigem Brennstoff, wobei der Einspeiseinjektor Folgendes umfasst:
einen Brenner (10) und einen Kühlmantel (1), der den Brenner (10) umgibt;
wobei der Kühlmantel (1) eine konische Kopfinnenwand, eine Spitzenwand (12), eine konische Kopfaußenwand und einen Innenkonus (18) umfasst;
wobei die konische Kopfinnenwand (11) an einer Wandecke (14) mit der Spitzenwand (12) verbunden ist, die Spitzenwand (12) mit der konischen Kopfaußenwand verbunden ist und der Innenkonus (18) von der konischen Kopfinnenwand, der Spitzenwand (12) und der konischen Kopfaußenwand umgeben ist;
wobei ein innerer Kanal (20), der einen Wärmeübertragungsfluid-Einlass umfasst, durch den Raum zwischen der konischen Kopfinnenwand (11) und dem Innenkonus (18) definiert ist;
wobei eine Strömungsrückführzone (26) in Fluidverbindung mit dem Spitzenkanal (22) steht und durch den Raum zwischen der konischen Kopfinnenwand, der Spitzenwand (12) und dem der Wandecke (14) am nächsten gelegenen Punkt des Innenkonus (18) definiert ist;
wobei der Spitzenkanal (22), der in Fluidverbindung mit der Strömungsrückführzone (26) steht, durch den Raum zwischen der Spitzenwand (12) und dem Innenkonus (18) definiert ist;
wobei ein äußerer Kanal (24), der in Fluidverbindung mit dem Spitzenkanal (22) steht, durch den Raum zwischen der konischen Kopfaußenwand (16) und dem Innenkonus (18) definiert ist;
wobei der innere Kanal (20) eine Dicke aufweist, die durch den Abstand von der konischen Kopfinnenwand (11) zu dem Innenkonus (18) definiert ist;
wobei das Verhältnis der Dicke des inneren Kanals (20) am Wärmeübertragungsfluid-Einlass zu der Dicke des inneren Kanals (20) an der Grenzfläche mit der Strömungsrückführzone (26) zwischen 1,5 und 3 beträgt.

2. Einspeiseinjektor nach Anspruch 1, ferner umfassend eine oder mehrere Rippen (30), die sich in den inneren Kanal (20) und/oder die Strömungsrückführungszone hinein erstrecken.

3. Einspeiseinjektor nach Anspruch 2, wobei die Länge der einen oder mehreren Rippen (30) zwischen 1 und 4 mm beträgt.

4. Einspeiseinjektor nach Anspruch 2, wobei die eine oder mehreren Rippen (30) eine einzige durchgehende zirkuläre Struktur umfassen.

5. Einspeiseinjektor nach Anspruch 1, ferner umfassend eine oder mehrere Rippen (30), die an der konischen Kopfinnenwand (11) angebracht sind und sich in die Strömungsrückführungszone hinein erstrecken.

6. Einspeiseinjektor nach Anspruch 5, wobei die Länge der einen oder mehreren Rippen (30) zwischen 1 und 4 mm beträgt.

7. Einspeiseinjektor nach Anspruch 5, wobei die eine oder mehreren Rippen (30) eine einzige durchgehende zirkuläre Struktur umfassen.

8. Einspeiseinjektor nach Anspruch 1, wobei die Wandecke (14) an der Grenzfläche mit der Strömungsrückführungszone (26) einen Krümmungsradius aufweist, gemessen entlang eines radialen Querschnitts, wobei der Krümmungsradius zwischen 0,5 und 4 mm beträgt.

9. Einspeiseinjektor nach Anspruch 1, wobei die Dicke der Spitzenwand (12) zwischen 1 mm und 8 mm beträgt.

10. Einspeiseinjektor nach Anspruch 1, ferner umfassend einen feuerfesten Block, der mit der Außenfläche der konischen Kopfaußenwand in Kontakt steht.

11. Verfahren zum Betreiben eines Einspeiseinjektors für einen Vergaser, wobei das Verfahren Folgendes umfasst:
Zuführen eines Wärmeübertragungsfluids durch einen inneren Kanal (20), der eine Strömungsdrossel (28) aufweist, um die lineare Geschwindigkeit des Wärmeübertragungsfluids zu erhöhen, und
Erwärmen des Wärmeübertragungsfluids durch direkten Kontakt mit einer Spitzenwand (12);
wobei die Spitzenwand (12) entlang der Grenzfläche zwischen der Spitzenwand (12) und dem Wärmeübertragungsfluid eine maximale Temperatur und eine minimale Temperatur aufweist;
wobei die Differenz zwischen der maximalen und der minimalen Temperatur weniger als 150 °C beträgt; und
wobei das Verhältnis der linearen Geschwindigkeit des Wärmeübertragungsfluids am Einlass des inneren Kanals (20) zu der linearen Geschwindigkeit des Wärmeübertragungsfluids am Auslass des inneren Kanals (20) zwischen 1,3 und 2,8 beträgt.

12. Verfahren nach Anspruch 11, wobei die maximale Temperatur entlang der Grenzfläche zwischen der Spitzenwand (12) und dem Wärmeübertragungsfluid weniger als 190 °C beträgt.

13. Verfahren nach Anspruch 11, wobei der Druck des Wärmeübertragungsfluids zwischen 0 und 10 bar größer ist als der Druck im Vergaser.

14. Verfahren nach Anspruch 11, wobei der Druck des Wärmeübertragungsfluids etwa 10 bar beträgt.

## Revendications

1. Injecteur d'alimentation destiné à la gazéification d'un flux d'alimentation comprenant une suspension de combustible carboné solide, l'injecteur d'alimentation comprenant :
un brûleur (10) et une enveloppe de refroidissement (1) entourant le brûleur (10) ;
dans lequel l'enveloppe de refroidissement (1) comprend une paroi interne de tête conique, une paroi de pointe (12), une paroi externe de tête conique et un cône interne (18) ;
dans lequel la paroi interne de tête conique (11) est reliée à la paroi de pointe (12) au niveau d'un coin de paroi (14), la paroi de pointe (12) est reliée à la paroi externe de tête conique, et le cône interne (18) est entouré par la paroi interne de tête conique, la paroi de pointe (12) et la paroi externe de tête conique ;
dans lequel un canal interne (20) comprenant une entrée de fluide caloporteur est défini par l'espace entre la paroi interne de tête conique (11) et le cône interne (18) ;
dans lequel une zone de recirculation de débit (26) est en communication de débit fluidique avec un canal de pointe (22) et est définie par l'espace entre la paroi interne de tête conique, la paroi de pointe (12) et la pointe du cône interne (18) la plus proche du coin de paroi (14) ;
dans lequel le canal de pointe (22) en communication de débit fluidique avec la zone de recirculation de débit (26) est défini par l'espace entre la paroi de pointe (12) et le cône interne (18) ;
dans lequel un canal externe (24) en communication de débit fluidique avec le canal de pointe (22) est défini par l'espace entre la paroi externe de tête conique (16) et le cône interne (18) ;
dans lequel le canal interne (20) a une épaisseur définie par la distance depuis la paroi interne de tête conique (11) jusqu'au cône interne (18) ;
dans lequel le rapport de l'épaisseur du canal interne (20) au niveau de l'entrée de fluide caloporteur à l'épaisseur du canal interne (20) à l'interface avec la zone de recirculation de débit (26) est compris entre 1,5 et 3.

2. Injecteur d'alimentation selon la revendication 1, comprenant en outre une ou plusieurs ailettes (30) s'étendant dans le canal interne (20) et/ou la zone de recirculation de débit.

3. Injecteur d'alimentation selon la revendication 2, dans lequel la longueur de la ou des ailettes (30) est comprise entre 1 et 4 mm.

4. Injecteur d'alimentation selon la revendication 2, dans lequel la ou les ailettes (30) comprennent une structure circulaire continue unique.

5. Injecteur d'alimentation selon la revendication 1, comprenant en outre une ou plusieurs ailettes (30) fixées à la paroi interne de tête conique (11) et s'étendant dans la zone de recirculation de débit.

6. Injecteur d'alimentation selon la revendication 5, dans lequel la longueur de la ou des ailettes (30) est comprise entre 1 et 4 mm.

7. Injecteur d'alimentation selon la revendication 5, dans lequel la ou les ailettes (30) comprennent une structure circulaire continue unique.

8. Injecteur d'alimentation selon la revendication 1, dans lequel le coin de paroi (14) au niveau de l'interface avec la zone de recirculation de débit (26) a un rayon de courbure comme mesuré le long d'une section transversale radiale, le rayon de courbure étant compris entre 0,5 et 4 mm.

9. Injecteur d'alimentation selon la revendication 1, dans lequel l'épaisseur de la paroi de pointe (12) est comprise entre 1 mm et 8 mm.

10. Injecteur d'alimentation selon la revendication 1, comprenant en outre un bloc réfractaire en contact avec la surface externe de la paroi externe de tête conique.

11. Procédé de fonctionnement d'un injecteur d'alimentation pour un gazéifieur, le procédé comprenant les étapes consistant à : introduire un fluide caloporteur à travers un canal interne (20) ayant une restriction de débit (28) pour augmenter la vitesse linéaire du fluide caloporteur, et chauffer le fluide caloporteur par contact direct avec une paroi de pointe (12) ;
dans lequel la paroi de pointe (12) a une température maximale et une température minimale le long de l'interface entre la paroi de pointe (12) et le fluide caloporteur ;
la différence entre les températures maximale et minimale est inférieure à 150 °C ; et
dans lequel le rapport de la vitesse linéaire du fluide caloporteur au niveau de l'entrée du canal interne (20) à la vitesse linéaire du fluide caloporteur au niveau de la sortie du canal interne (20) est comprise entre 1,3 et 2,8.

12. Procédé selon la revendication 11, dans lequel la température maximale le long de l'interface entre la paroi de pointe (12) et le fluide caloporteur est inférieure à 190 °C.

13. Procédé selon la revendication 11, dans lequel la pression du fluide caloporteur est comprise entre 0 et 10 bar de plus que la pression dans le gazéifieur.

14. Procédé selon la revendication 11, dans lequel la pression du fluide caloporteur est d'environ 10 bara.
